# EUROPEAN PATENT APPLICATION

(11) **EP 4 796 332 A1**
(43) Date of publication of application: **26.08.2026**
(21) Application number: 26157136.8
(22) Date of filing: 09.02.2026
(51) Int. Cl.: B41J 11/00

(54) **IMAGE FORMING APPARATUS**

(30) Priority: 17.02.2025 JP 2025023658
(71) Applicant: Konica Minolta, Inc., Tokyo 100-7015 (JP)
(72) Inventor: TOYOIZUMI, Teruhiko, Tokyo, 100-7015 (JP); DATE, Masakazu, Tokyo, 100-7015 (JP)
(74) Representative: Hoffmann Eitle

(57) **Abstract**

An image forming apparatus of the present invention is an image forming apparatus for forming an image on a recording medium conveyed from upstream to downstream. The image forming apparatus includes: an ink ejection section for ejecting an ink onto a recording medium; and an active ray irradiation section for irradiating, with active rays, the recording medium onto which the ejected ink has landed and which is conveyed from an upstream side to a downstream side in an active ray irradiation region. The active ray irradiation section irradiates, with active rays, the recording medium such that when the active ray irradiation region is divided into two in a central portion thereof in a conveyance direction of the recording medium, maximum irradiance of the active rays is located on the downstream side.

## Description

### BACKGROUND OF THE INVENTION

### 1. Field of the Invention

The present invention relates to an image forming apparatus.

### 2. Description of Related Art

An image forming method using an inkjet method is used in various fields because an image can be formed easily and inexpensively. As an image forming method using an inkjet method, a method is known in which an inkjet ink is landed on a recording medium and then the inkjet ink is cured by irradiation with active rays (for example, see PTL 1).

In recent years, in the field of digital commercial printing using an active ray-curable inkjet ink, higher image quality and higher speed have been required. As the speed of inkjet printing increases, the light amount of active rays emitted from a light source needs to be increased in order to secure the integrated light amount required to cure an inkjet ink.

PTL 1 (WO2013/161328) describes an image forming method in which an active ray-curable inkjet ink is landed on a recording medium and then irradiated with ultraviolet rays to cure the active ray-curable inkjet ink.

In the image forming method described in PTL 1, a gelling agent is added to the active ray-curable inkjet ink to enhance the pinning properties. The gelling agent increases the viscosity of the inkjet ink by precipitating (solidifying) due to a temperature decrease when the inkjet ink lands on a recording medium. In addition, the irradiated ultraviolet rays have a unimodal irradiation distribution in the conveyance direction of the recording medium.

### SUMMARY OF THE INVENTION

In the image forming method described in PTL 1, a wax component is precipitated in a curing process, and thus unevenness is formed on the surface of the dots, resulting in a reduction in gloss. On the other hand, with an increase in the speed of inkjet printing, the time from landing of an inkjet ink on a recording medium to irradiation with active rays is shortened, and by increasing the light amount of active rays, fixation of dots starts before precipitation of a wax component starts. Therefore, there is a problem in that a desired gloss cannot be obtained due to smoothing of dot surfaces.

Therefore, an object of the present invention is to provide an image forming apparatus capable of obtaining desired gloss.

An image forming apparatus according to an embodiment of the present invention is an image forming apparatus for forming an image on a recording medium conveyed from upstream to downstream, the image forming apparatus including: an ink ejection section for ejecting an ink onto the recording medium; and an active ray irradiation section for irradiating, with an active ray, the recording medium onto which the ejected ink has landed and which is conveyed from an upstream side to a downstream side in an active ray irradiation region. In the image forming apparatus, the active ray irradiation section emits the active ray such that when the active ray irradiation region is divided into two at a central portion of the active ray irradiation region in a conveyance direction of the recording medium, maximum irradiance of the active rays is located on the downstream side.

### BRIEF DESCRIPTION OF DRAWING

The advantages and features provided by one or more embodiments of the invention will become more fully understood from the detailed description given hereinbelow and the appended drawings which are given by way of illustration only, and thus are not intended as a definition of the limits of the present invention:
Fig. 1 is a schematic diagram illustrating a configuration of an image forming apparatus according to an embodiment of the present invention;
Fig. 2A is a diagram illustrating an example of an irradiance distribution in an active ray irradiation region, and Fig. 2B is a diagram illustrating an arrangement of light sources; and
Fig. 3A and 3B are each another view illustrating the arrangement of light sources; and
Figs. 4A and B are views illustrating the relationship between the first shielding reflection member and the irradiance distribution.

### DESCRIPTION OF THE PREFERRED EMBODIMENTS

Hereinafter, one or more embodiments of the present invention will be described with reference to the drawings. However, the scope of the invention is not limited to the disclosed embodiments.

### (Configuration of image forming apparatus)

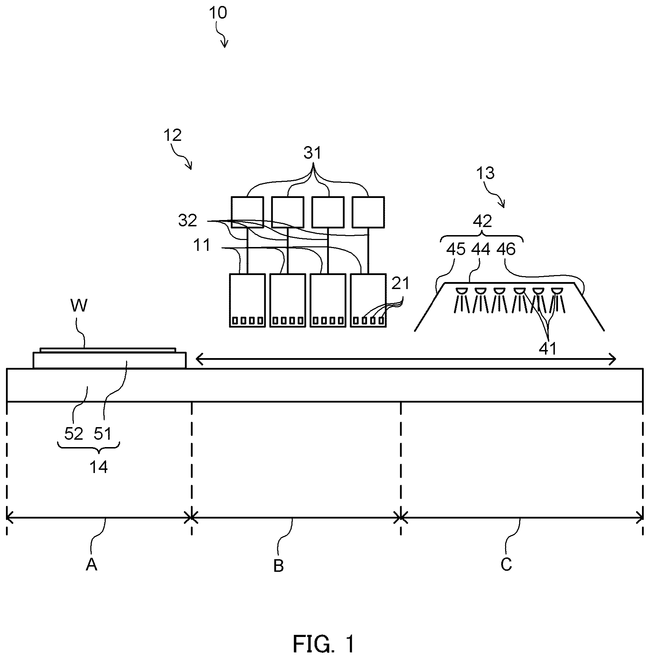

Fig. 1 is a schematic diagram which illustrates a configuration of an image forming apparatus according to an embodiment of the present invention.

A printing method in the image forming apparatus 10 is not particularly limited as long as it is a printing method using ink that is cured by being irradiated with active rays. Examples of the printing method include an inkjet method and an offset method. In the present embodiment, image forming apparatus 10 of an inkjet method will be described.

As illustrated in Fig. 1, the image forming apparatus 10 includes a head carriage 11 for housing a plurality of inkjet heads 21, an ink supply section 12 for supplying inkjet ink to the head carriage 11, an active ray irradiation section (i.e., active ray irradiator) 13 disposed downstream of the head carriage 11 (in the conveyance direction of the recording medium W), and a moving section 14 disposed along the conveyance path of the recording medium W for moving the recording medium W. The image forming apparatus 10 according to the present embodiment performs image formation by moving the stage of the moving section 14 to a placement region A for disposing the recording medium W, an ejection region B for ejecting the inkjet ink, and an active ray irradiation region C for emitting active rays. In the present embodiment, the placement region A, the ejection region B, and the active ray irradiation region C are disposed side by side from the upstream side to the downstream side of the conveyance path of the recording medium W.

In the placement region A, a recording medium W is disposed on the stage 51 of the moving section 14, and the recording medium W, on which the image is formed, is removed from the stage 51. There is no particular limitation on how the recording medium W is disposed on the stage 51 and how the recording medium W is removed from the stage 51. Any of the methods may be automatically performed by another device, or may be manually performed by a user.

In the ejection region B, the inkjet ink is ejected onto the recording medium W from the plurality of inkjet heads 21.

In the active ray irradiation region C, active rays are emitted from the active ray irradiation section 13, and the inkjet ink is cured to form an image.

The head carriage 11 is disposed in the ejection region B so as to cover the entire width of the recording medium W, and houses a plurality of inkjet head 21 provided for each color. The head carriage 11 is disposed in the ejection region B, which is on the downstream side of the placement region A and on the upstream side in the active ray irradiation region C. The number of head carriages 11 is not particularly limited. In the present embodiment, the number of head carriages 11 is the same as the number of colors of inkjet ink.

The inkjet head 21 (ink ejection section (i.e., ink ejector)) ejects the inkjet ink supplied from the ink supply section 12 onto the recording medium W. A plurality of inkjet heads 21 are disposed in the conveyance direction of the recording medium W for each color. The number of inkjet heads 21 disposed in the conveyance direction of the recording medium W is set according to the nozzle density of the inkjet head 21 and the resolution of the printed image. For example, in a case where an image having a resolution of 1440dpi is formed using the inkjet heads 21 having a droplet amount of 2pL and a nozzle density of 360dpi, the four inkjet heads 21 may be disposed so as to be shifted with respect to the conveyance direction of the recording medium W. In addition, in a case where an image having 720 × 720dpi resolution is formed using the inkjet heads 21 having a droplet amount of 6pL and a nozzle density of 360dpi, the two inkjet heads 21 may be disposed to be shifted from each other. Here, dpi represents the number of ink droplets (dots) per 2.54 cm.

The ink supply section 12 supplies inkjet ink to the inkjet head 21. The ink supply section 12 includes a tank 31 in which inkjet ink is stored, and an ink channel 32 connecting the tank 31 with the inkjet head 21.

The inkjet ink is preferably an active ray-curable ink containing a gelling agent. The inkjet ink includes a photopolymerizable compound, a photopolymerization initiator, and a gelling agent.

The photopolymerizable compound is a compound which is crosslinked or polymerized by irradiation with active rays. The photopolymerizable compound may be used alone or in combination of two or more types thereof. The photopolymerizable compound is a radically polymerizable compound or a cationically polymerizable compound, and a radically polymerizable compound is preferable. The total content of the photopolymerizable compound in the inkjet ink is preferably in a range of 1 to 97% by mass, and more preferably in a range of 30 to 95% by mass.

The photopolymerization initiator is classified into an intramolecular bond cleavage type and an intramolecular hydrogen abstraction type. The content of the photopolymerization initiator is preferably in a range of 0.1 to 10.0% by mass and more preferably in a range of 2.0 to 8.0% by mass based on the total amount of the inkjet ink.

The gelling agent has a function of causing the inkjet ink to undergo a reversible sol-gel phase transition depending on the temperature. The gelling agent is required to be dissolved in the photopolymerizable compound or the like at least at a temperature higher than the gelation temperature and to be crystallized in the inkjet ink at a temperature equal to or lower than the gelation temperature. The content of the gelling agent in the inkjet ink is preferably in a range of 0.5 to 7.0% by mass and more preferably in a range of 1.0 to 5.0% by mass based on the total amount of the inkjet ink.

The tank 31 is connected to the head carriage 11 via an ink channel 32. From the viewpoint of stably ejecting ink droplets, a heating mechanism (not illustrated) is disposed to heat the ink in the tank 31, the ink channel 32, the head carriage 11, and the inkjet head 21 to a predetermined temperature.

The active ray irradiation section 13 irradiates a recording medium W in the active ray irradiation region C with active rays-the inkjet ink having been ejected from the inkjet head 21 and landed on the recording medium W. The active ray irradiation section 13 is disposed downstream of the ejection region B. The active ray irradiation section 13 is disposed so that the center thereof is on the downstream side relative to the central portion of the active ray irradiation region C in the conveyance direction of the recording medium W. The active ray irradiation section 13 includes a plurality of light sources 41, and a housing 42 including a first shielding reflection member 45 disposed on the upstream side in the conveyance direction of the recording medium W and a second shielding reflection member 46 disposed on the downstream side in the conveyance direction of the recording medium W.

The light source 41 emits active rays toward the inkjet ink. The number of light sources 41 is not particularly limited as long as it is more than one. The type of active rays emitted from the light source 41 is appropriately set according to the type of inkjet ink. The type of the active rays is, for example, ultraviolet rays. The peak wavelength of the active rays emitted from the light source 41 is, for example, preferably in the range of 360 to 420 nm, and more preferably in the range of 380 to 410 nm. The light source 41 is not particularly limited, but is preferably a surface-emitting type LED, more preferably a surface-emitting type UV-LED. The surface-emitting type UV-LED includes a substrate and a plurality of light emitting elements disposed thereon, and may further include, if necessary, a lens or a diffusion plate in front of the light emitting elements in order to adjust light collection and light diffusion.

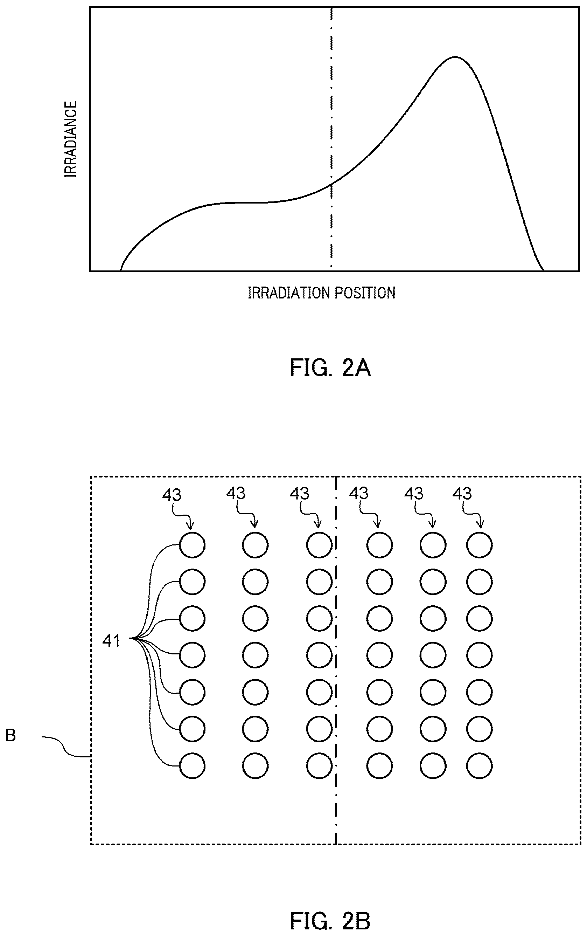

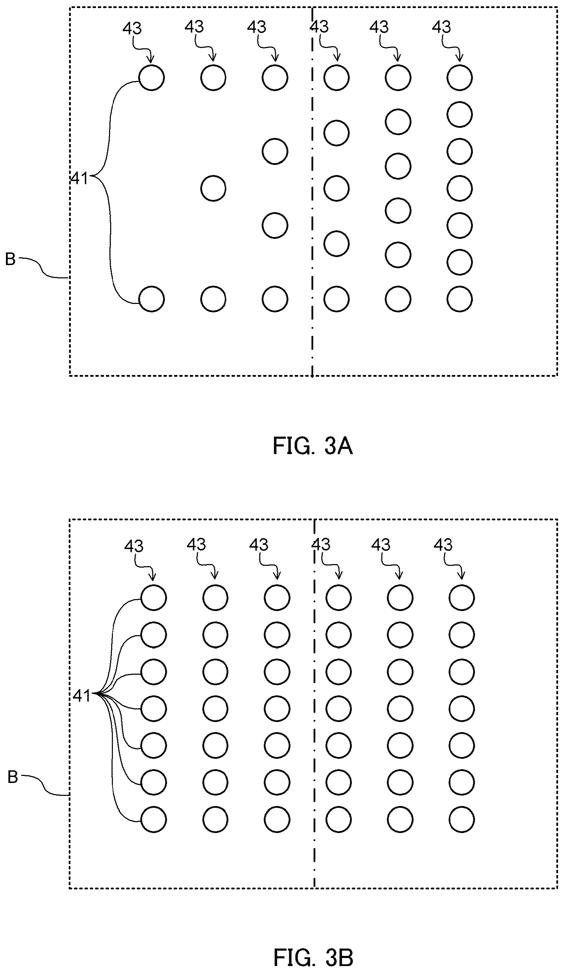

Fig. 2A is a diagram illustrating an example of the irradiance distribution in the active ray irradiation region C, and Fig. 2B is a diagram illustrating the arrangement of the light source 41. Figs. 3A and B are each another diagram illustrating the arrangement of the light sources 41. The horizontal axis of Fig. 2A indicates an irradiation position, and the vertical axis indicates irradiance. The left side in Figs. 2A, 2B, 3A, and 3B is the upstream side in the conveyance direction of recording medium W, and the right side is the downstream side in the conveyance direction of recording medium W.

As illustrated in Fig. 2A, the light sources 41 are disposed so as to irradiate the active rays such that the maximum irradiance of the active rays is located on the downstream side when the active ray irradiation region C is divided into two at the central portion thereof in the conveyance direction of the recording medium W. The arrangement of the light sources 41 is not particularly limited as long as the maximum irradiance of the active rays is located on the downstream side in the active ray irradiation region C. The plurality of light sources 41 may be disposed at random, may be disposed in a staggered manner, or may be disposed in a plurality of light source rows 43 including the plurality of light sources 41. From the viewpoint of easily setting the maximum irradiance of the active rays, the plurality of light sources 41 are preferably disposed so as to have a plurality of light source rows 43 including the plurality of light sources 41. Note that the number of the light source rows 43 disposed on the upstream side in the active ray irradiation region C and the number of the light source rows 43 disposed on the downstream side in the active ray irradiation region C are not particularly limited. Here, a case where the plurality of light source arrays 43 are disposed on the upstream side and downstream side will be described.

As illustrated in Fig. 2B, the active ray irradiation section 13 may include a plurality of light source rows 43 arranged in the conveyance direction of the recording medium W, and each of the plurality of light source rows 43 may include a plurality of light sources 41 disposed in a direction orthogonal to the conveyance direction of the recording medium W. In the example illustrated in Fig. 2B, the active ray irradiation section 13 has six light source rows 43, and each light source row 43 includes seven light sources 41. Three light source rows 43 are disposed on the upstream side, and three light source rows 43 are disposed on the downstream side. The light source rows 43 are disposed such that the arrangement density of one or more light source rows 43 on the upstream side is lower than the arrangement density of one or more light source rows 43 on the downstream side. In the example illustrated in Fig. 2B, the light source rows 43 are disposed such that the distance between the three light source rows 43 on the upstream side is longer than the distance between the three light source rows 43 on the downstream side. Thus, the maximum irradiance of the active rays is located on the downstream side in the active ray irradiation region C.

As illustrated in Fig. 3A, the active ray irradiation section 13 may includes a plurality of light source rows 43 arranged in the conveyance direction of the recording medium W, and each of the plurality of light source rows 43 may include a plurality of light sources 41 disposed in a direction orthogonal to the conveyance direction of the recording medium W. In the example illustrated in Fig. 3A, the active ray irradiation section 13 has six light source rows 43, and the number of light source 41 included in each light source row 43 is different between the rows. Further, three light source rows 43 are disposed on the upstream side, and three light source rows 43 are disposed on the downstream side. The light source 41 are disposed such that the number of the light source 41 in the light source row 43 on the upstream side is smaller than the number of the light source 41 in the light source row 43 on the downstream side. In the example illustrated in Fig. 3A, the light source rows 43 are disposed such that the distances between the three light source rows 43 on the upstream side are the same as the distances between the three light source rows 43 on the downstream side. The light source 41 are disposed such that the number of light source 41 included in the light source array 43 increases from the upstream side toward the downstream side. Thus, the maximum irradiance of the active rays is located on the downstream side in the active ray irradiation region C.

As illustrated in Fig. 3B, the active ray irradiation section 13 includes a plurality of light source rows 43 arranged in the conveyance direction of the recording medium W, and the plurality of light source rows 43 each include a plurality of light sources 41 disposed in a direction orthogonal to the conveyance direction of the recording medium W. Three light source rows 43 are disposed on the upstream side, and three light source rows 43 are disposed on the downstream side. Furthermore, the number of the light source 41 included in respective light source rows 43 are the same (seven). The luminance of the plurality of light sources 41 on the upstream side is lower than the luminance of the plurality of light sources 41 on the downstream side. In the example illustrated in Fig. 3B, the light sources 41 are disposed such that the luminance of the light sources 41 on the upstream side is lower than the luminance of the light sources 41 on the downstream side. Thus, the maximum irradiance of the active rays is located on the downstream side in the active ray irradiation region C.

The plurality of light sources 41 may be disposed such that the maximum irradiance of the active rays is located on the downstream side in the active ray irradiation region C, by combining differences in the distance between the light source rows 43, the number of the light sources 41 in the light source rows 43, and the luminance of the light sources 41.

The housing 42 supports the plurality of light sources 41 and defines an irradiation range of the active rays emitted from the light sources 41. The housing 42 includes a top plate 44, two sidewall members (not illustrated), a first shielding reflection member 45, and a second shielding reflection member 46.

The top plate 44 is disposed to face the recording medium W to be conveyed. In the present embodiment, the top plate 44 has a rectangular shape in a plan view, sidewall members are respectively connected to two opposing sides along the conveyance direction of the recording medium W, and the first shielding reflection member 45 and the second shielding reflection member 46 are respectively connected to the other two opposing sides. A plurality of light sources 41 are disposed on an inner surface of the top plate 44.

Two sidewall members define the irradiation range of the active rays in the width direction of the recording medium W.

The first shielding reflection member 45 is disposed on the upstream side in the active ray irradiation region C, and defines the irradiation range of the active rays on the upstream side in the active ray irradiation region C. An upper end portion of the first shielding reflection member 45 is connected to the top plate 44. The first shielding reflection member 45 is inclined so as to be separated from the recording medium W from the upstream side to the downstream side in the direction along the conveyance direction of the recording medium W. The inclination angle of the first shielding reflection member 45 with respect to the perpendicular line of the recording medium W is, for example, in a range of 5 to 80°. The first shielding reflection member 45 is configured such that the inclination angle thereof can be adjusted. A method of adjusting the inclination angle of the first shielding reflection member 45 is not particularly limited. A method of adjusting the inclination angle of the first shielding reflection member 45 may be configured to be automatically adjusted or may be configured to be manually adjusted.

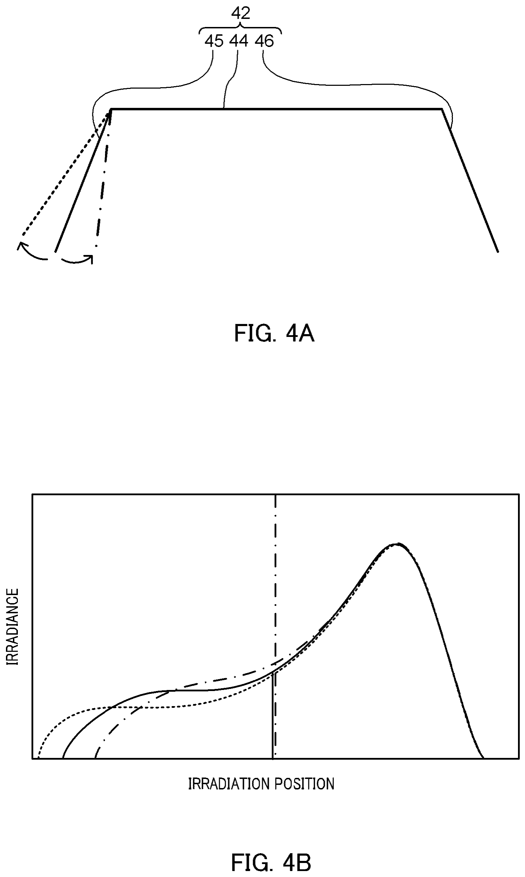

Figs. 4A and 4B are views illustrating the relationship between the inclination angle of the first shielding reflection member 45 and the irradiance distribution. The dotted lines in Figs. 4A and 4B indicate the case where the inclination angle of the first shielding reflection member 45 is large, and the chain lines indicate the case where the inclination angle of the first shielding reflection member 45 is small.

As indicated by the dotted lines in of Figs. 4A and 4B, when the inclination angle of the first shielding reflection member 45 (the angle with respect to the perpendicular line of the recording medium W) increases, the irradiance distribution on the upstream side spreads and the irradiance on the upstream side decreases. On the other hand, as indicated by the chain lines in Figs. 4A and 4B, when the inclination angle of the first shielding reflection member 45 (the angle with respect to the perpendicular line of the recording medium W) decreases, the irradiance distribution on the upstream side narrows and the irradiance on the upstream side increases. In this way, the irradiance distribution on the upstream side can be adjusted by adjusting the inclination angle of the first shielding reflection member 45.

It is preferable that the inclination angle of the first shielding reflection member 45 is adjusted based on any one of the instruction from a user, the concentration of the ink, the type of the ink, the temperature of the recording medium, and the conveyance speed of the recording medium.

For example, in the case of a user's instruction, the user determines the curing state of the inkjet ink and appropriately adjusts the inclination angle of the first shielding reflection member 45.

For example, in a case where the concentration of the ink is high, the inclination angle of the first shielding reflection member 45 is adjusted so that the inclination angle becomes large (so that the first shielding reflection member 45 lies down). On the contrary, when the concentration of the ink is low, the inclination angle of the first shielding reflection member 45 is adjusted so that the inclination angle becomes small (so that the first shielding reflection member 45 stands).

For example, when the temperature of the recording medium is high, the inclination angle of the first shielding reflection member 45 is adjusted so that the inclination angle becomes large. On the other hand, when the temperature of the recording medium is low, the inclination angle of the first shielding reflection member 45 is adjusted so that the inclination angle becomes small.

For example, in a case where the conveyance speed of the recording medium W is high, the inclination angle of the first shielding reflection member 45 is adjusted so that the inclination angle becomes large. On the other hand, when the conveyance speed of the recording medium W is low, the inclination angle of the first shielding reflection member 45 is adjusted so that the inclination angle becomes small.

The second shielding reflection member 46 is disposed on the downstream side in the active ray irradiation region C, and defines the irradiation range of the active rays on the downstream side in the active ray irradiation region C. An upper end portion of the second shielding reflection member 46 is connected to the top plate 44. The second shielding reflection member 46 is inclined so as to approach the recording medium W from the upstream side toward the downstream side in the direction along the conveyance direction of the recording medium W. The inclination angle of the second shielding reflection member 46 with respect to the perpendicular line of the recording medium W is, for example, within a range of 5 to 80°. A method of adjusting the inclination angle of the second shielding reflection member 46 is not particularly limited. A method of adjusting the inclination angle of the second shielding reflection member 46 may be configured to be automatically adjusted or may be configured to be manually adjusted.

It is preferable that the absolute value of the angle of the first shielding and reflecting member 45 with respect to the perpendicular to the recording medium W is greater than the absolute value of the angle of the second shielding and reflecting member 46 with respect to the perpendicular to the recording medium W. That is, the first shielding reflection member 45 is inclined so as to spread toward the upstream side when the first shielding reflection member is viewed from the active ray irradiation region C. On the other hand, the second shielding reflection member 46 is inclined so as to spread toward the downstream side when the second shielding reflection member is viewed from the active ray irradiation region C. The first shielding reflection member 45 is inclined at an angle larger than the inclination angle of the second shielding reflection member 46 when the shielding reflection members are viewed from the active ray irradiation region C.

The moving section 14 moves a recording medium W. Specifically, the moving section 14 moves the recording medium W between a placement region A for disposing the recording medium W, an ejection region B for ejecting ink onto the disposed recording medium W, and an irradiation area for irradiating the recording medium W with active rays.

The configuration of the movement section 14 is not particularly limited as long as the above-described function can be exhibited. In the present embodiment, the movement section 14 includes a stage 51 on which the recording medium W is disposed and a moving mechanism 52 for moving the stage 51 in the conveyance direction of the recording medium W.

The conveyance speed at which the stage 51 (recording medium W) is conveyed by the moving section 14 is not particularly limited and is set as appropriate. Furthermore, the moving section 14 may move the stage 51 (the recording medium W) on the conveyance path at a constant speed, or may change the movement speed in the ejection region B and the active ray irradiation region C. In the present embodiment, the movement speeds in the ejection region B and the active ray irradiation region C are the same. The stage 51, on which the recording medium W is disposed in the placement region A, moves to the ejection region B and the active ray irradiation region C in this order.

### (Image forming method)

An image forming method using the above-described image forming apparatus 10 will be described.

First, in the placement region A, the recording medium W is disposed on the stage 51 of the moving section 14.

Next, the stage 51 is moved toward the ejection region B at a constant speed by the moving mechanism 52 of the moving section 14. At this time, while the recording medium W passes through the ejection region B, the inkjet head 21 ejects the inkjet ink onto the recording medium W.

Next, the stage 51 is moved toward the active ray irradiation region C at a constant speed by the moving mechanism 52 of the moving section 14. At this time, while the recording medium W passes through the active ray irradiation region C, the recording medium W (inkjet ink) is irradiated with active rays by the light source 41.

The recording medium W irradiated with active rays and having an image formed thereon is moved to the placement region A by the moving mechanism 52, and the recording medium W is replaced.

Through the above steps, an image is formed on the recording medium W.

Here, a mechanism in which the image forming apparatus of the present embodiment can appropriately cure the active ray-curable ink will be described. The ink ejected from the inkjet head and landed on the recording medium is irradiated with active rays having low irradiance. Thus, melting of the ink coating film due to an excessive increase in the temperature of the surface of the recording medium is suppressed, and the ink coating film is temporarily cured in a state where the surface of the ink coating film has appropriate unevenness. Next, the ink is irradiated with active rays having a high irradiance. Thus, the ink in the ink coating film is cured.

On the other hand, when the ink is irradiated with active rays having high irradiance from the beginning, the ink is cured before the surface of the ink coating film becomes uneven, and therefore the gloss becomes too high.

### (Effect)

As described above, in the present invention, since the active rays are is emitted so that the maximum irradiance of the active rays is located on the downstream side in the active ray irradiation region, appropriate gloss can be obtained.

### Industrial Applicability

According to the image forming apparatus of the present invention, an image having an appropriate gloss can be produced. Therefore, accuracy of an image formed by the image forming method can be enhanced, which is useful, for example, in the field of image formation.

Although embodiments of the present invention have been described and illustrated in detail, the disclosed embodiments are made for purpose of illustration and example only and not limitation. The scope of the present invention should be interpreted by terms of the appended claims.

## Claims

1. The image forming apparatus (10) for forming an image on a recording medium (W) conveyed from upstream to downstream, the image forming apparatus comprising:
an ink ejector for ejecting an ink onto the recording medium (W); and
an active ray irradiator (13) for irradiating, with an active ray, the recording medium (W) onto which the ejected ink has landed and which is conveyed from an upstream side to a downstream side in an active ray irradiation region (C), wherein
the active ray irradiator (13) emits the active ray such that when the active ray irradiation region (C) is divided into two at a central portion of the active ray irradiation region in a conveyance direction of the recording medium (W), maximum irradiance of the active ray is located on the downstream side.

2. The image forming apparatus according to claim 1, wherein
the active ray irradiator (13) has a center located on the downstream side relative to the central portion.

3. The image forming apparatus according to claim 1 or 2, wherein:
the active ray irradiator (13) includes a plurality of light source rows (43) arranged in the conveyance direction of the recording medium (W);
the plurality of light source rows (43) each include a plurality of light sources (41) disposed in a direction orthogonal to the conveyance direction of the recording medium (W); and
an arrangement density of the light source rows (43) on the upstream side is lower than an arrangement density of the light source rows (43) on the downstream side.

4. The image forming apparatus according to any one of claims 1 to 3, wherein:
the active ray irradiator (13) includes a plurality of light source rows (43) arranged in the conveyance direction of the recording medium (W);
the plurality of light source rows (43) each include a plurality of light sources (41) disposed in a direction orthogonal to the conveyance direction of the recording medium (W); and
the number of the light sources (41) in a light source row (43) on the upstream side is smaller than the number of the light sources (41) in a light source row (43) on the downstream side, the light source row (43) on the upstream side being among the plurality of light source rows (43), the light source row (43) on the downstream side being among the plurality of light source rows (43).

5. The image forming apparatus according to any one of claims 1 to 4, wherein:
the active ray irradiator (13) includes a plurality of light source rows (43) arranged in the conveyance direction of the recording medium (W); and
the plurality of light source rows (43) each include a plurality of light sources (41) disposed in a direction orthogonal to a conveyance direction of the recording medium (W); and
luminance of the plurality of light sources (41) on the upstream side is lower than luminance of the plurality of light sources (41) on the downstream side.

6. The image forming apparatus according to any one of claims 1 to 5, wherein:
the active ray irradiator (13) includes
a plurality of light sources (41),
a first shielding reflection member (45) disposed on the upstream side in the conveyance direction of the recording medium (W), and
a second shielding reflection member (46) disposed on the downstream side in the conveyance direction of the recording medium, wherein
the first shielding reflection member (45) is inclined so as to be separated from the recording medium (W) from the upstream side to the downstream side in a direction along the conveyance direction of the recording medium (W), and
the second shielding reflection member (46) is inclined so as to approach the recording medium (W) from the upstream side toward the downstream side in the direction along the conveyance direction of the recording medium (W).

7. The image forming apparatus according to claim 6, wherein
the first shielding reflection member (45) is configured such that an inclination angle of the first shielding reflection member (45) is adjustable.

8. The image forming apparatus according to claim 7, wherein
an absolute value of an angle of the first shielding reflection member (45) with respect to a perpendicular line of the recording medium (W) is larger than an absolute value of an angle of the second shielding reflection member (46) with respect to the perpendicular line of the recording medium (W).

9. The image forming apparatus according to claim 6, wherein
an inclination angle of the first shielding reflection member (45) or the second shielding reflection member (46) is adjusted based on any one of an instruction from a user, a concentration of the ink, a temperature of the recording medium (W), and a conveyance speed of the recording medium (W).

10. The image forming apparatus according to any one of claims 1 to 9, wherein
the ink is an active ray-curable ink containing a gelling agent.

11. The image forming apparatus according to any one of claims 1 to 10, wherein
the image forming apparatus (10) is an image forming apparatus of an inkjet method.
